# EUROPEAN PATENT SPECIFICATION

(11) **EP 3 959 064 B1**
(45) Date of publication and mention of the grant of the patent: **03.01.2024**
(21) Application number: 20794604.7
(22) Date of filing: 24.04.2020
(51) Int. Cl.: B29C 64/129, B29C 64/286, B29C 64/295, B29C 64/314, B29C 64/277, B29C 64/393, B29C 64/282, B33Y 10/00, B33Y 30/00, B33Y 40/00, B33Y 50/02

(54) **STEREOLITHOGRAPHY APPARATUS AND METHOD FOR CONTROLLING TEMPERATURE OF RESIN MATERIAL**
STEREOLITHOGRAFISCHE VORRICHTUNG UND VERFAHREN ZUR REGELUNG DER TEMPERATUR VON HARZMATERIAL
APPAREIL DE STÉRÉOLITHOGRAPHIE ET MÉTHODE DE RÉGULATION DE TEMPÉRATURE DE MATÉRIAU DE RÉSINE

(30) Priority: 25.04.2019 FI 20195330
(43) Date of publication of application: 02.03.2022
(73) Proprietor: Planmeca OY, 00880 Helsinki (FI)
(72) Inventor: HÄMÄLÄINEN, Sami, 00880 Helsinki (FI); MYLLYLÄ, Tuomas, 00880 Helsinki (FI); VUORIO, Ville, 00880 Helsinki (FI)
(86) International application number: PCT/FI2020/050274
(87) International publication number: WO 2020/216999

(56) References cited:
- EP-A1- 3 284 583
- EP-A2- 0 470 705
- EP-A2- 1 057 615
- WO-A1-2016/078838
- WO-A2-2018/204938
- US-A1- 2016 288 412
- US-A1- 2016 368 210
- US-A1- 2018 272 606

## Description

### FIELD OF THE INVENTION

The invention concerns the technology of stereolithographic 3D printing, also known as stereolithographic additive manufacturing. In particular, the invention concerns stereolithography apparatuses with photomask-based exposure arrangements.

### BACKGROUND OF THE INVENTION

Stereolithography is a 3D printing or additive manufacturing technique in which optical radiation is used to photopolymerize suitable raw material to produce the desired object. The raw material comes to the process in the form of a resin. A vat is used to hold an amount of resin, and a build platform is moved in the vertical direction so that the object to be produced grows layer by layer, beginning on a build surface of the build platform. The optical radiation used for photopolymerizing may come from above the vat, in which case the build platform moves downwards through the remaining resin as the manufacturing proceeds. The present description concerns in particular the so-called "bottom up" variant of stereolithography, in which the photopolymerizing optical radiation comes from below the vat and the build platform moves upwards away from the remaining resin as the manufacturing proceeds.

Resins used in stereolithographic 3D printing have a recommended operating temperature in which the resin fluidness and viscosity is optimal for the printing process. In most cases the recommended temperature is greater than the typical room temperature. In known solutions, the resin is heated by heating resistors which may be integrated in the vat. Such apparatus, corresponding to the preamble of claim 1, is disclosed in US 2016/288412. The problem of such solutions is that the heating process is slow and inefficient because the heating energy is first transferred into the vat then into the resin. For the same reason, it is difficult to control the temperature (heating and cooling) of the resin as the temperature change is slow.

### SUMMARY

The invention is aimed to present a stereolithography apparatus and a method of operating it so that heating of the resin in a stereolithography apparatus is improved.

According to a first aspect, a stereolithography apparatus has an exposure arrangement, comprising a radiative element configured to emit optical radiation, and a masking element configured to form an exposure pattern by partially masking optical radiation from the radiative element, a table having a horizontal upper surface on which a vat is placeable for holding resin to be photopolymerized in a stereolithographic 3D printing process by the optical radiation, wherein the masking element is arranged in thermal connection with the horizontal upper surface, and the apparatus further comprises a controller, coupled to said radiative element, for emitting optical radiation from the radiative element to the masking element, and to said masking element, for keeping the masking element closed, wherein the controller is configured to execute a pre-heating process for the resin to heat the resin in the vat by emitting optical radiation from the radiative element to the closed masking element whereby the masking element is heated by the optical radiation absorbed in the masking element and thermal energy is further transferred to the resin.

In an embodiment of the stereolithography apparatus a temperature detector is provided within the apparatus for measuring the temperature of the resin.

In an embodiment of the stereolithography apparatus said controller is coupled to the temperature detector to receive resin temperature data from said temperature detector, wherein said controller is configured to use said resin temperature data in controlling the pre-heating process of the stereolithography apparatus.

In an embodiment of the stereolithography apparatus said masking element comprises a liquid crystal element.

In an embodiment of the stereolithography apparatus said radiative element comprises a light-emitting diode (LED) source.

In an embodiment of the stereolithography apparatus said light-emitting diode source comprises an array of LED elements, which surface area is substantially equal to the surface area of the masking element.

In an embodiment of the stereolithography apparatus said apparatus comprises a cooling channel between the radiative element and the masking element.

In an embodiment of the stereolithography apparatus said cooling channel is planar and extends along that side surface of said masking element that is directed towards the radiative element.

In an embodiment of the stereolithography apparatus said apparatus further comprises an optical imaging detector having a field of view, directed so that at least part of a working region above the horizontal upper surface is within said field of view when said optical imaging detector is in an operating position.

In an embodiment of the stereolithography apparatus said a controller coupled to the optical imaging detector for receiving optical imaging data from said optical imaging detector, wherein the controller is configured to use said optical imaging data in the pre-heating process for the resin.

In an embodiment of the stereolithography apparatus said controller is configured to execute a machine vision process to recognize objects from said optical image data and to make decisions based on such recognized objects.

According to a second aspect, a method for pre-heating the resin within the stereolithography apparatus according to claims 1-11, comprises the steps of:
- supplying resin onto a vat arranged on the horizontal plane of the table,
- closing the exposure pattern of the masking element,
- keeping on the radiative element and emitting optical radiation from the radiative element to the masking element for heating the masking element from which the thermal energy is transferred into the resin in the vat.

In an embodiment of the method said method comprises steps of:
- measuring resin temperature by temperature detector, and
- sending temperature data to the controller.

In an embodiment of the method said the controller is configured to stop the pre-heating process, when the resin temperature data received from the temperature detector is desired.

It is to be understood that the embodiments of the invention described above may be used in any combination with each other. Several of the embodiments may be combined together to form a further embodiment of the invention.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** illustrates a stereolithography apparatus in a front view with its lid closed,
**Figure 2** illustrates a stereolithography apparatus in a side view with its lid closed,
**Figure 3** illustrates a stereolithography apparatus in a front view with its lid open,
**Figure 4** illustrates a stereolithography apparatus in a side view with its lid open,
**Figure 5** illustrates an exposure arrangement of a stereolithography apparatus,
**Figure 6** illustrates a cross section of stereolithography apparatus in a side view,
**Figure 7** illustrates a stereolithography apparatus comprising a holder for a resin capsule and a a resin capsule,
**Figure 8** illustrates a stereolithography apparatus having a lid closed in a side view,
**Figure 9** illustrates a cooling principle, and
**Figure 10** illustrates an example of a block diagram of a stereolithography apparatus

### DETAILED DESCRIPTION

Concerning the stereolithography apparatuses discussed in this detailed description, the following shall be noted.

A stereolithography apparatus can also be called a stereolithographic 3D printer, or a stereolithographic additive manufacturing apparatus. A stereolithography apparatus may be a 3D printer for fabrication of dental objects. It may be a 3D printer for creating dental splints, models, surgical guides, temporary fillings, and orthodontic models with true precision and efficiency. Additionally or alternatively, a stereolithography apparatus may be a 3D printer for fabrication of any stereolithographically 3D-printable objects other than dental objects.

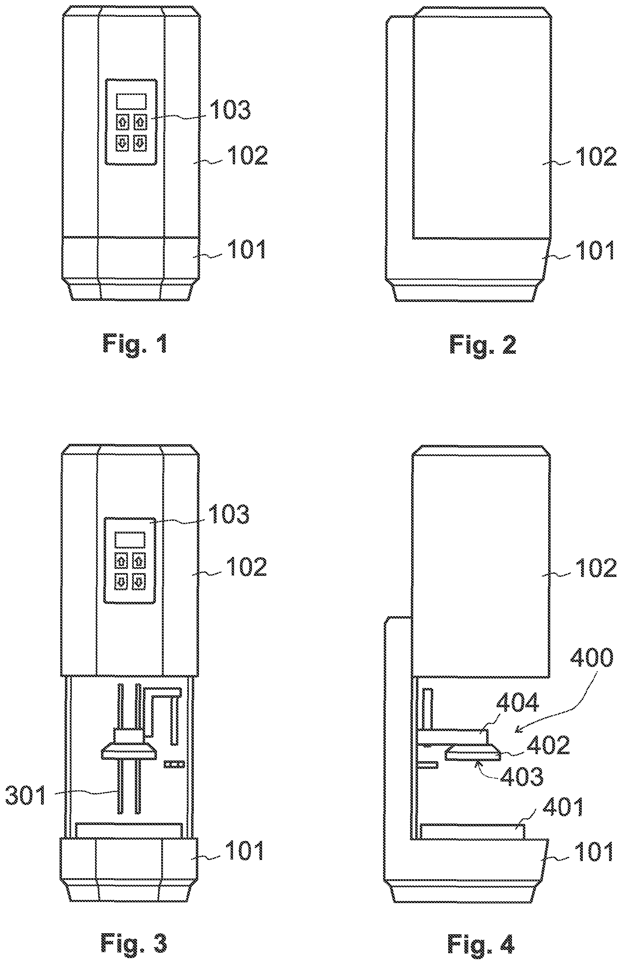

Figs. 1 to 4 illustrate an example of a stereolithography apparatus. The apparatus could also be called a stereolithographic 3D printer, or a stereolithographic additive manufacturing apparatus. Basic parts of the apparatus are a base part 101 and a lid 102, of which the lid 102 is movably coupled to the base part 101 so that it can move between a closed position shown in figs. 1 and 2 and an open position shown in figs. 3 and 4. Here the direction of the movement is vertical, but this is not a requirement; the movement of the lid 102 in relation to the base part 101 could take place in other directions. An important advantage of a movable lid of this kind is that an ongoing stereolithographic 3D printing process can be protected from any interfering external optical radiation by closing the lid 102.

A vat 401 may be provided in the base part 101 for holding resin for use in the stereolithographic 3D printing process. The vat 401 may be a fixed part of the stereolithography apparatus or the base part 101 may comprise a holder for receiving a removable vat. The holder may be for example a table having an essentially horizontal upper surface on which a vat 401 is placeable. Additionally or alternatively the holder may comprise support rails, alignment aids, locking mechanisms, and/or other comparable means configured to support a vat and/or to ensure that it assumes and remains in the appropriate location. In this description all references to the vat 401 are to be understood to cover both a fixed vat arrangement and an arrangement in which a removable vat 401 can be received in a holder of said kind. The bottom of the vat 401 may be transparent or translucent for the kind of optical radiation used for photopolymerizing the resin .

A build platform 402 with a build surface 403 is supported above the vat 401 so that the build surface 403 faces the vat 401. This arrangement is typical to the so-called "bottom up" variant of stereolithography, in which the photopolymerizing radiation comes from below the vat. The bottom of the vat 401 is or can be selectively made transparent or translucent for the kind of radiation used for said photopolymerizing.

A moving mechanism is provided and configured to move the build platform 402 in a working movement range between first and second extreme positions. Of these, the first extreme position is the one proximal to the vat 401, and the second extreme position is the one distant from the vat 401. In the first extreme position the build surface 403 is very close to the bottom of the vat 401. The first layer of the object to be manufactured will be photopolymerized onto the build surface 403 when the build platform 402 is in the first extreme position. Consequently, in said first extreme position the distance between the build surface 403 and the bottom of the vat 401 is in the order of the thickness of one layer in the stereolithographic 3D printing process.

The position shown in figs. 3 and 4 may be the second extreme position, or at least closer to the second extreme position than to the first extreme position. A working region of the stereolithography apparatus may be said to exist between the base part 101 and the second extreme position of the build platform 402, because the object to be manufactured will appear within this region. The build platform 402 does not need to move up to or even close to the second extreme position during the manufacturing of an object; the second extreme position may be most useful for making it easier to detach a manufactured object from the build platform 402 once the object is complete.

In the embodiment of figs. 1 to 4 the moving mechanism for moving the build platform 402 is inside the base part 101, and only represented by the two slits 301 seen in a vertical surface of the base part 101, as well as the horizontal support 404 of the build platform 402. There is also a similarly hidden moving mechanism for moving the lid 102 with respect to the base part 101. This second moving mechanism may comprise parts inside the base part 101 and/or parts inside the lid 102. Enclosing essentially all moving mechanisms within the casings of the base part 101 and/or the lid 102 involves the advantage of added safety, because it makes it improbable that a user could get injured by any moving parts of such mechanisms.

The horizontal support 404 of the build platform 402 is shown only schematically in the drawings. In a practical implementation a support of the build platform 402 may comprise various advanced technical features, like joints and/or fine tuning mechanisms for ensuring that the orientation of the build surface 403 is appropriate. However, such features are out of the scope of this description and are therefore omitted here.

Another feature of the exemplary stereolithography apparatus of figs. 1 to 4 is a user interface, which in this example comprises a touch-sensitive display 103 in the lid 102. The user interface may comprise various functions for implementing interactions between the apparatus and its user, including but not being limited to buttons for controlling the movements of the lid 102 and the build platform 402. A touch-sensitive display is an advantageous feature of a user interface in particular if the stereolithography apparatus is to be used in environments where thorough cleaning and disinfecting are regularly required, like at medical and/or dental clinics. Placing a touch-sensitive display 103 and/or other parts of the user interface in a front part of the lid 102 is advantageous, because it makes such parts of the user interface easily accessible to the user. As such, at least some parts of the user interface could be implemented in the base part 101. Yet another possibility is to implement at least a part of the user interface in a suitably programmed portable user device, like a tablet or smartphone, so that short-distance wired or wireless communications are set up between the stereolithography apparatus and the portable user device.

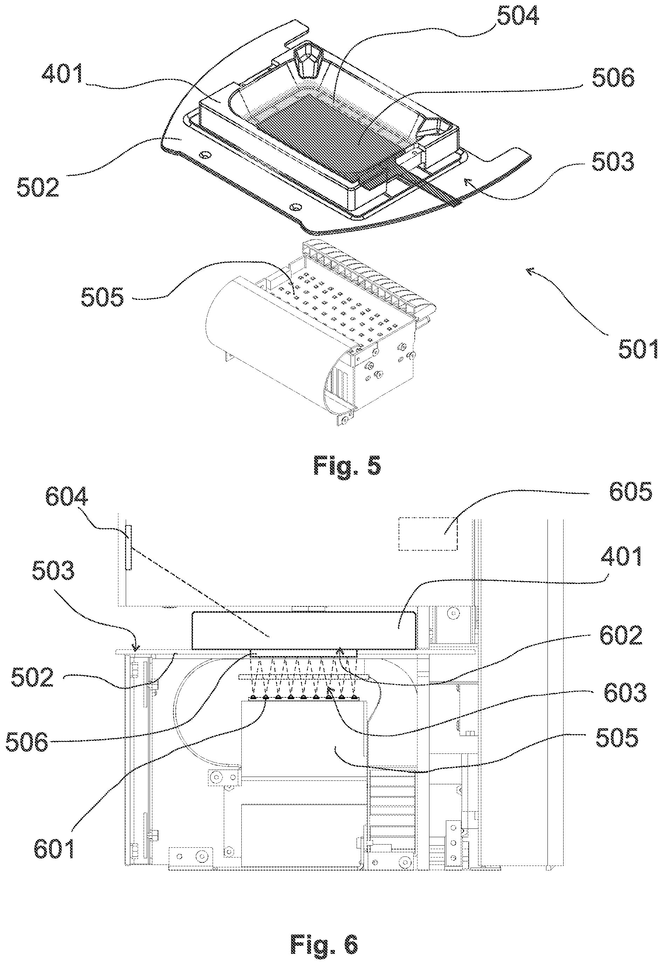

Figs. 5 and 6 illustrate an embodiment of an exposure arrangement 501 comprising a radiative element 505 suitable for emitting optical radiation. The optical radiation is preferably suitable for causing selective photopolymerization of resin 504 in the vat 401 during a stereolithographic 3D printing process. Wavelength spectrum and intensity of the optical radiation may be selected based on the type of resin used for the stereolithographic 3D printing process.

A "radiative element" may refer to an element which may form, as such, a complete, operable source of optical radiation. Alternatively, a radiative element may be used as one element of a complete radiative assembly comprising also other elements, units, and/or structures.

A radiative element may comprise any type of radiation source, e.g., an incandescent or other thermal radiation source, a luminescent radiation source, and/or an electric arc or a gas discharge lamp. In a preferred embodiment, a radiative element comprises a light-emitting diode (LED) source. Said LED source may comprise one LED element (601) or a plurality of LED elements, for example, an array of LED elements (601).

In the embodiments of fig. 5 and 6, the exposure arrangement 501 also comprises a masking element 506 (seen through the bottom of the vat in fig. 5), having a substantially rectangular masking area 602, for forming an exposure pattern by partially masking optical radiation from the radiative element 505. In other embodiments, the masking area may have different shape.

A "masking area" may refer to a part of a surface of a masking element configured to receive and/or to be illuminated by optical radiation emitted by a radiative element. Additionally or alternatively, "masking area" may refer to a part of a surface of a masking element such that the masking element has spatially and/or temporally variable transmissive and/or reflective properties for optical radiation to be emitted by a radiative element and incident onto the part of the surface of the masking element.

A masking area may be partially or entirely definable based on a spatial intensity distribution of optical radiation to be emitted by a radiative element and incident onto the masking element. For example, a masking area may be definable as parts of at least one surface of a masking element, wherein intensity of optical radiation to be emitted by a radiative element is configured to be at least 50 % of a maximum intensity of optical radiation to be emitted by the radiative element on the surface of the masking element.

A "substantially rectangular masking area" may refer to a projection of a masking area having a substantially rectangular shape on at least one plane. A substantially rectangular masking area may preferably be substantially planar. In this specification, the term "substantially rectangular" is used in a broad sense, comprising, for example, rectangles with rounded or beveled corners.

"Forming an exposure pattern by partially masking" may refer to configuring a masking element such that optical radiation emitted by a radiative element may propagate onto the masking area and, from the masking area, a part of the optical radiation may propagate further into a working region.

A masking element may comprise a sheet, plate, or film with spatially varying transmittance and/or reflectance for optical radiation emitted by a radiative element, forming at least a part of a masking area. The sheet, plate, or film may comprise a substrate material transparent or translucent to optical radiation emitted by the radiative element, e.g., glass, quartz, plastic, and/or sapphire, and a masking material, e.g., a metal and/or ink, on the substrate material for partially masking optical radiation emitted by the radiative element.

In the embodiment of fig. 5 and 6, the masking element 506 comprises a substantially rectangular transmissive liquid crystal element, an outer surface thereof acting as the masking area. In other embodiments, a masking element may comprise similar or other types of masking elements, e.g., reflective liquid crystal elements or digital micromirror devices. In embodiments comprising liquid crystal elements, any suitable liquid crystal device technology known in the art may be used.

A transmissive liquid crystal element may comprise, for example: a first polarizing filter for polarizing optical radiation, which is emitted by a radiative element and incident onto a masking area, along a first direction; a first substrate transparent for optical radiation emitted by the radiative element; a first plurality of transparent electrodes arranged onto the first substrate, shapes thereof at least partially defining exposure patterns producible in a working region; a twisted nematic liquid crystal layer; a second plurality of transparent electrodes, shapes thereof at least partially defining the exposure patterns producible in the working region; a second substrate transparent for optical radiation emitted by the radiative element, wherein the second plurality of transparent electrodes may be arranged onto the second substrate; and a second polarizing filter with its polarizing axis oriented perpendicular to the first direction.

In the embodiments of figs. 5 and 6, the exposure arrangement 501 also comprises an optical path 603 (seen in fig. 6) between the radiative element 505 and the masking area 602.

As commonly known in the art, an "optical path" may refer to a path that optical radiation takes, while propagating through an optical medium or system. Consequently, an "optical path between a radiative element and a masking area" may refer to parts of an exposure arrangement being arranged such that at least some optical radiation from a radiative element may be incident onto a masking area. Generally, an exposure arrangement may comprise a plurality of optical paths between a radiative element and a masking area. An exposure arrangement may also comprise a plurality of optical paths between any of a plurality of radiative elements and any of a plurality of masking areas.

An exposure arrangement may comprise reflective optical components, e.g., mirrors and/or beamsplitters; refractive optical components, e.g., prisms and/or lenses; diffractive optical components, e.g., diffusers, gratings and/or Fresnel lenses; and/or fiber-optical components along an optical path. In some embodiments, an optical path may exist even if said components were to be removed from the stereolithography apparatus. In some embodiments, removal of said components may break an optical path. In such case, said components may be central to the operation of the exposure arrangement. In some embodiments, an exposure arrangement may comprise none of said components along an optical path.

The embodiment shown in figs. 5 and 6 may be used for pre-heating the resin before the printing process. The exposure arrangement 501 comprises a radiative element 505 for emitting optical radiation, and a masking element 506 for forming an exposure pattern by partially masking optical radiation from the radiative element 505. The apparatus further comprises a table 502, which may be part of the base part or a separate part attached to the base part. The table may have a horizontal upper surface 503 on which the vat 401 may be placeable for holding the resin to be photopolymerized by the optical radiation. The masking element 506 is, according to claim 1, arranged in thermal connection with the horizontal upper surface, i.e. the masking element is arranged so that thermal energy of the masking element may be transferred efficiently into the object, e.g. bottom of the vat 401, placed on the upper surface 503. In an embodiment, the table 502 comprises an opening in which the masking element may be installed. In an embodiment, the upper surface (facing towards the working region) of the masking element forms an essentially plane surface with the upper surface 503 of the table. In an embodiment the upper surface 503 comprises a transparent film arranged between the placeable vat 401 and the masking element.

The masking element 506 is provided at a suitable location between the radiative element 505 and the vat 401, which is placed on the horizontal upper surface 503, for allowing only selected portions of the generated radiation to reach the resin in the vat 401. In order to avoid diffraction-induced inaccuracy in the borderlines between photopolymerized and unpolymerized resin, it is advantageous to place the masking element 506 as close to the currently affected layer of resin as possible. The "bottom up" variant of stereolithography is considered here, which means that the masking element 506 is most advantageously under the bottom surface of the vat 401 and as close to it as possible. In typical applications of the "bottom up" variant of stereolithography the build surface of the build platform is planar, and consequently also the bottom of the vat 401 and the masking element 506 are both planar.

As the radiative element is turned on and kept on, and the optical radiation is emitted towards the masking element 506, the optical radiation is absorbed in the masking element causing it to warm up. The masking element is, according to the claims, closed, i.e. the masking element is turned black for masking as much as possible of the optical radiation from the radiative element and, thus, warming up in the most efficient way. As the masking element 506 is in thermal connection with the horizontal upper surface 503, thermal energy may be transferred into the object placed on the horizontal upper surface 503, i.e. the bottom of the vat, placed on the surface, is warmed up. Further, when the resin is supplied into the vat 401, the resin is, according to the claims, warmed up by the thermal energy transferred from the masking element 506.

The stereolithography apparatus may comprise at least one controller, which is described in more detail below.

In an embodiment, a controller 605 is, according to claim 1, coupled to the radiative element 505 and to the masking element 506, and said controller 605 is, according to claim 1, configured to execute a pre-heating process for the resin to heat the resin in the vat by emitting of the optical radiation from the radiative element and the keeping the masking element closed. The coupling between the controller 605 and radiative element 506 and the masking element may be a wired coupling or a wireless coupling, or it may comprise both wired and wireless elements either as alternatives of each other or augmenting each other.

In an embodiment, the radiative element 505 comprises a light-emitting diode (LED) source, which may comprise an array of LED elements 601. The array of LED elements 601 may have a surface area substantially equal to the surface area of the masking element 506. Consequently, the intensity of the optical radiation emitted from the radiative element may be uniform.

In an embodiment, the stereolithography apparatus comprises a temperature detector 604 for measuring the temperature of the resin. The temperature detector may comprise an infrared sensor to detect the infrared energy emitted from the resin and means to convert the radiant power to an electrical signal. The controller 605 may be coupled with the temperature detector 604 to receive the electrical signal, i.e. resin temperature data from the temperature detector 604. The controller 605 may be configured to use said resin temperature data in controlling the pre-heating process of the stereolithography apparatus. The controller 605 may receive resin temperature data from the temperature detector constantly and it may adjust the pre-heating process based on said resin temperature data, i.e. closed-loop system. The controller 605 may be configured to the pre-heating process when the resin temperature is desired, i.e. the temperature data received from the temperature detector is desired.

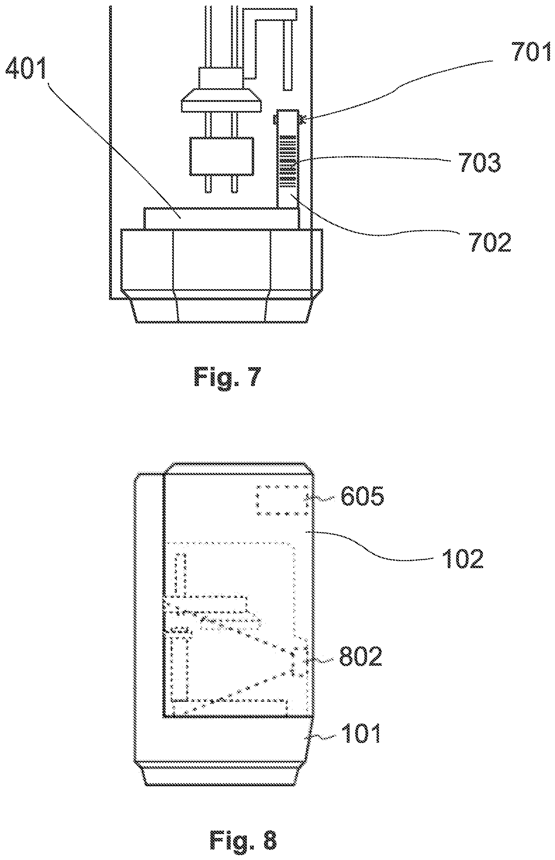

Fig. 7 shows an embodiment of a stereolithography apparatus comprising a holder 701 for receiving a resin capsule 702. The apparatus may comprise two or more holders for receiving plurality of resin capsules. The resin capsule 702 may comprise graphically or electrically presented information 702 regarding resin inside the resin capsule 702. The information may include the optimal operating temperature of the resin.

Significant advantage can be gained by providing the stereolithography apparatus with an optical imaging detector as in embodiment of fig. 8. The optical imaging detector may be installed and directed so that at least a part of the working region is within the field of view of the optical imaging detector. If the optical imaging detector is movable between at least one operating position and some other positions, the working region should appear within the field of view of the optical imaging detector at least when the optical imaging detector is in said operating position. An optical imaging detector is a device that is capable of producing optical image data indicative of what can be optically detected within its field of view. Most optical imaging detectors can be characterized as (digital) cameras, but there are e.g. optical imaging detectors working on other wavelengths than visible light, which may not necessarily be commonly referred to as cameras. In order to maintain general applicability the term optical imaging detector is used in this description.

The stereolithography apparatus shown in fig. 8 comprises a controller 605 coupled to the optical imaging detector 802 for receiving optical image data from the optical imaging detector 802. The controller 8 may be configured to use such optical image data in controlling operation of the stereolithography apparatus, i.e. in the pre-heating process for the resin. More examples of such controlling are described in more detail later in this text. The coupling between the optical imaging detector 802 and the controller 605 may be a wired coupling or a wireless coupling, or it may comprise both wired and wireless elements either as alternatives of each other or augmenting each other.

The controller 605 may be installed in the lid 102, but it could alternatively be installed in the base part 101. The controller functionality could even be distributed so that some parts of it could be implemented with circuits located in the lid 102 while other parts of the controller functionality could be implemented with circuits located in the base part 101. Placing the controller in the lid 102 may be advantageous if also a significant portion of the other electronics, like the user interface, is placed in the lid 102, because wiring may become simpler. The user interface is not shown in fig. 8 in order to enhance graphical clarity.

The controller 605 may be configured to execute a machine vision process to recognize objects from the optical image data it receives from the optical imaging detector 802. The optical image data is essentially a digital representation of an image recorded by the optical imaging detector 802, and machine vision in general means extracting information from an image. Thus by executing a machine vision process the controller 605 is capable of extracting information that enables recognizing various objects seen by the optical imaging detector 802. The controller 605 may be configured to make decisions based on such recognized objects.

One example of an object that the controller 605 may recognize is a resin capsule, or a piece of graphically represented information carried by a resin capsule. In order to provide some background for this kind of applications, the task of resin handling is described in some more detail in the following.

Figs. 7 and 8 illustrate a case in which a resin capsule 702 has been received in the holder 701. A visible surface (visible in the field of view of the optical imaging detector 802) of the resin capsule 801 is provided with a piece 703 of graphically represented information. In the example of fig. 7 a barcode is used, but any other form of graphically represented information could be used, like a QR code or a color or color combination of the resin capsule 702 or a part of it. The use of graphically represented information involves the advantage that it can be read with an optical imaging detector, for which there may be also other advantageous uses in the stereolithography apparatus.

The information carried by the piece 703 of graphically represented information is or reveals advantageously something that is pertinent to just that resin that is contained in that particular resin capsule 702. Additionally or alternatively the information carried by the piece 703 of graphically represented information may be or reveal something that is pertinent to that particular resin capsule itself. Said information may contain for example one or more of the following: an identifier of resin contained in the resin capsule 702, an indicator of amount of resin contained in the resin capsule 702, a manufacturing date of resin contained in the resin capsule 702, a best before date of resin contained in the resin capsule 702, unique identifier of the resin capsule 702, a digital signature of a provider of resin contained in the resin capsule 702.

As an interesting special case, the information carried by the piece 703 of graphically represented information may contain a piece of parameter data. The controller 605, on the other hand, may be configured to use such a piece of parameter data as a value of an operating parameter of the stereolithography apparatus. Examples of such operating parameters include but are not limited to the following: a pre-heating temperature of resin, a layer exposure time, a layer thickness, a moving speed of a build platform, or a waiting time between two successive method steps in stereolithographic 3D printing.

The use of an optical imaging detector involves the particular advantage that the same optical imaging detector can be used also for other purposes in the stereolithography apparatus. Such other purposes may even substantiate the provision of an optical imaging detector even if it is not used for reading graphically represented information from resin tanks. It may be used for example detecting the resin level in the vat.

In some cases, the resin may be warmer than the optimal operating temperature for said resin. For example, during the printing process, the resin may warm up above the optimal operating temperature. Thus, in an embodiment, the stereolithography apparatus comprises a cooling channel 901 between the masking element 506 and the radiative element 505 to for cooling the masking element and further cooling the resin in the vat 401. A cooling channel is generally defined as a passage through which a fluid cooling medium may flow. Liquids, such as water, may have a relatively high specific heat capacity and are therefore relatively efficient for use as fluid cooling mediums. However, in the particular framework of stereolithographic 3D printing they have also disadvantages. Water, for example, attenuates quite strongly ultraviolet radiation, i.e. the wavelengths that should pass through to the desired portions of resin to cause photopolymerization. Gas bubbles may form in water when it gets heated, which causes anomalies in the propagation of radiation through the water. Water may leak into unwanted parts in the apparatus or even out of the apparatus, which in turn may cause all kind of harm and even hazards.

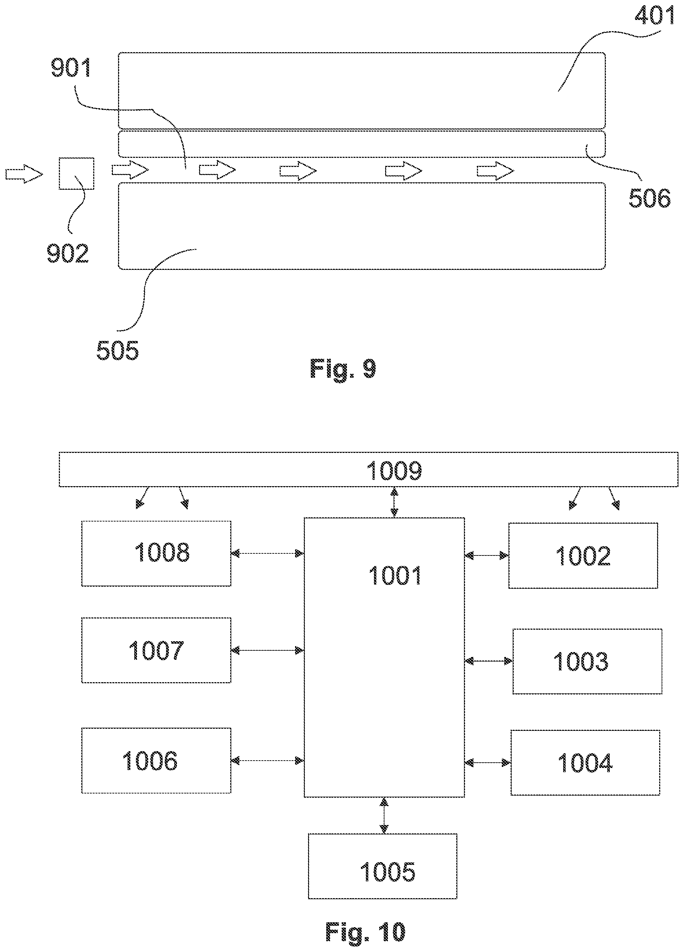

For these reasons it has been considered more advantageous to use a coolant gas as the fluid cooling medium. The most readily available coolant gas is air. As illustrated schematically in fig. 9, air can be made to flow through the cooling channel (s) 901 by providing suitable air inlets and outlets. In order to ensure sufficient flow of air it is advantageous to equip the stereolithography apparatus with a blower 902 that is configured to force air through said cooling channel(s) 901. In the schematic illustration of fig. 9 the blower 902 is shown at or close to the inlet of the cooling channel (s) 901, so that it blows air into the cooling channel(s) 901. Additionally or alternatively a blower could be used at or close to the outlet of the cooling channel (s) 901, so that it would draw air from the cooling channel(s) 901.

The most important cooling mechanism achieved with a forced flow of coolant gas is forced heat convection, which means that the coolant gas absorbs heat from the walls of the cooling channel(s) and transports the absorbed heat away when it flows through the outlet(s) of the cooling channel(s). Forced heat convection works the most effectively when the temperature difference is large between the surface to be cooled and the fluid cooling medium flowing past it, and when the flow of the fluid cooling medium is strong and turbulent. A strong flow is easy to take care of by providing a sufficiently powerful blower 902 and a sufficiently large cross section of all channels through which the coolant gas must flow. In order to make the temperature difference larger it is possible to equip the stereolithography apparatus with a precooler, through which the coolant gas is made to flow before it flows into the cooling channel (s) 901. Precoolers of various kinds are known as such and are therefore not described here in more detail. In order to make the flow turbulent the cooling channel(s) may be designed with some internal features and/or dimensions that disturb any otherwise laminar flow and cause turbulence.

In an embodiment, the cooling channel 901 is a planar and extends along that side surface of said masking element 506 that is directed towards the radiative element.

In an embodiment, a controller is connected to a memory comprising a computer program comprising instructions which, when the program is executed by a computer, cause the computer for pre-heating a resin within a stereolithography apparatus to carry out the steps of:
- closing the exposure pattern of the masking element 506,
- keeping on the radiative element 505 and emitting optical radiation from the radiative element to the masking element for heating the masking element from which the thermal energy is transferred into the resin in the vat.

Fig. 10 is a schematic block diagram that illustrates some parts of an example of a stereolithography apparatus according to an embodiment.

A controller 1001 has a central role in the operation of the apparatus. Structurally and functionally it may be based on one or more processors configured to execute machine-readable instructions stored in one or more memories that may comprise at least one of built-in memories or detachable memories.

A lid mechanism 1002 comprises the mechanical and electrical parts that serve the purpose of moving the lid that opens or closes the working region.

A build platform mechanism 1003 comprises the mechanical and electrical parts that serve the purpose of moving the build platform between its first and second extreme positions. The build platform mechanism 1003 may also comprise parts that serve to ensure correct angular positioning of the build platform.

A resin delivery mechanism 1004 comprises the mechanical and electrical parts that serve the purpose of pumping resin into the vat, and possibly draining unused resin from the vat back into some long-term repository.

An exposure arrangement 1005 comprises the mechanical, electrical, and optical parts that serve the purpose of controllably emitting radiation that causes selective photopolymerization of resin during the stereolithographic 3D printing process.

A reader(s) and/or sensor(s) block 1006 comprises all devices that can be classified as readers or sensors. For example all optical imaging detectors of the kind described earlier, as well as optical radiation emitters that serve other purposes than photopolymerizing resin during the stereolithographic 3D printing process belongs to the reader(s) and/or sensor(s) block 1006.

The stereolithography apparatus may comprise a data interface 1007 for exchanging data with other devices. The data interface 1007 can be used for example to receive from some other device the 3D modelling data that describes, what kind of an object should be produced through stereolithographic 3D printing. The data interface 1007 can also be used to provide diagnostic data about the operation of the stereolithography apparatus to other devices, such as a monitoring computer.

The stereolithography apparatus may comprise a user interface 1008 for exchanging information with one or more users. The user interface 1008 may comprise tangible, local user interface means for facilitating immediate interaction with a user next to the stereolithography apparatus. Additionally or alternatively the user interface 1008 may comprise software and communication means for facilitating remote operation of the stereolithography apparatus for example through a network or through an app installed on a separate user's device such as a smartphone or other personal wireless communications device.

The stereolithography apparatus may comprise a power block 1009 configured to convert operating power, such as AC from an electricity distribution network, into voltages and currents needed by the various parts of the apparatus and to safely and reliably deliver such voltages and currents to said parts of the apparatus.

Example embodiments may be implemented in software, hardware, application logic or a combination of software, hardware and application logic. The example embodiments can store information relating to various methods described herein. This information can be stored in one or more memories, such as a hard disk, optical disk, magneto-optical disk, RAM, and the like. One or more databases can store the information used to implement the example embodiments. The databases can be organized using data structures (e.g., records, tables, arrays, fields, graphs, trees, lists, and the like) included in one or more memories or storage devices listed herein. The methods described with respect to the example embodiments can include appropriate data structures for storing data collected and/or generated by the methods of the devices and subsystems of the example embodiments in one or more databases.

The components of the example embodiments may include computer readable medium or memories for holding instructions programmed according to the teachings and for holding data structures, tables, records, and/or other data described herein. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer. A computer-readable medium may include a computer-readable storage medium that may be any media or means that can contain or store the instructions for use by or in connection with an instruction execution system, apparatus, or device, such as a computer. A computer readable medium can include any suitable medium that participates in providing instructions to a processor for execution. Such a medium can take many forms, including but not limited to, non-volatile media, volatile media, transmission media, and the like.

The invention and its embodiments are not limited to the examples described above; instead they may vary within the scope of the claims.

## Claims

1. A stereolithography apparatus, having:
- an exposure arrangement (501) comprising:
- a radiative element (505) configured to emit optical radiation, and
- a masking element (506) configured to form an exposure pattern by partially masking optical radiation from the radiative element (505),
- a table (502) having a horizontal upper surface (503) on which is placeable a vat (401) for holding resin to be photopolymerized in a stereolithographic 3D printing process by optical radiation,
wherein
the masking element (506) is arranged in thermal connection with the horizontal upper surface (503), and the apparatus further comprises a controller (605), the controller (605) being coupled i) to said radiative element (505) for emitting optical radiation from the radiative element (505) to the masking element (506), wherein the controller is configured to execute a resin pre-heating process to heat the resin in the vat, **characterised in that** the controller is coupled ii) to said masking element (506) for keeping the masking element (506) closed,
wherein the controller (605) is configured to execute the resin pre-heating process to heat the resin in the vat (401) by emitting optical radiation from the radiative element (505) to the closed masking element (506), whereby the masking element (506) is heated by the optical radiation absorbed in the masking element (506) and thermal energy is further transferred to the resin in the vat(401).

2. A stereolithography apparatus according to claim 1, wherein a temperature detector (604) is provided within the apparatus for measuring temperature of the resin in the vat (401).

3. A stereolithography apparatus (100) according to claim 2, wherein the controller (605) is coupled to the temperature detector (604) to receive resin temperature data from said temperature detector (604), wherein said controller (605) is configured to use said resin temperature data in controlling the resin pre-heating process.

4. A stereolithography apparatus according to any of the preceding claims, wherein the masking element (506) comprises a liquid crystal element.

5. A stereolithography apparatus according to any of the preceding claims, wherein the radiative element (505) comprises a light-emitting diode (LED) source.

6. A stereolithography apparatus according to claim 5, wherein the light-emitting diode source comprises an array of LED elements (601), whose surface area is substantially equal to a surface area of the masking element (506).

7. A stereolithography apparatus according to any of the preceding claims, wherein the apparatus comprises a cooling channel (901) between the radiative element (505) and the masking element (506).

8. A stereolithography apparatus according to claim 7, wherein said cooling channel (901) is planar and extends along that side surface of said masking element (506) that is directed towards the radiative element (505).

9. A stereolithography apparatus according to any of the preceding claims, wherein the apparatus further comprises an optical imaging detector (802) having a field of view, directed so that at least part of a working region above the horizontal upper surface (604) is within said field of view when said optical imaging detector (802) is in an operating position.

10. A stereolithography apparatus according to claim 9, wherein the controller (605) is coupled to the optical imaging detector (802) for receiving optical image data from said optical imaging detector (802), wherein the controller (605) is configured to use said optical image data in the resin pre-heating process.

11. A stereolithography apparatus according to claim 10, wherein said controller (605) is configured to execute a machine vision process to recognize objects from said optical image data and to make decisions based on such recognized objects.

12. A method for pre-heating resin within the stereolithography apparatus according to any of the preceding claims, comprising the steps of:
- supplying resin onto the vat (401) arranged on the horizontal plane (503) of the table (502),
- closing the exposure pattern of the masking element (506),
- keeping on the radiative element (505) and emitting optical radiation from the radiative element (505) to the masking element (506) for heating the masking element (506), from which thermal energy is transferred into the resin in the vat (401).

13. A method for pre-heating resin according to claim 12, comprising steps of:
- measuring resin temperature by the temperature detector (604), and
- sending resin temperature data to the controller (605).

14. A method for pre-heating the resin according to claim 12 or 13, wherein the controller (605) is configured to stop the pre-heating process when the resin temperature data received from the temperature detector (604) is desired.

## Patentansprüche

1. Stereolithographiegerät, mit:
- einer Belichtungsanordnung (501), umfassend:
- ein Strahlungselement (505), das so konfiguriert ist, dass es optische Strahlung emittiert, und
- ein Maskierungselement (506), das so konfiguriert ist, dass es ein Belichtungsmuster durch teilweises Maskieren der optischen Strahlung des Strahlungselements (505) bildet,
- einen Tisch (502) mit einer horizontalen oberen Fläche (503), auf der ein Behältnis (401) zur Aufnahme von Harz platziert werden kann, das in einem stereolithografischen 3D-Druckverfahren durch optische Strahlung photopolymerisiert werden soll,
wobei
das Maskierungselement (506) in thermischer Verbindung mit der horizontalen oberen Fläche (503) angeordnet ist, und
die Vorrichtung ferner eine Steuereinheit (605) umfasst, wobei die Steuereinheit (605) i) mit dem Strahlungselement (505) gekoppelt ist, um optische Strahlung von dem Strahlungselement (505) zu dem Maskierungselement (506) zu emittieren, wobei die Steuereinheit so konfiguriert ist, dass sie einen Harzvorheizprozess ausführt, um das Harz in dem Behältnis zu erhitzen, **dadurch gekennzeichnet, dass** die Steuereinheit ii) mit dem Maskierungselement (506) gekoppelt ist, um das Maskierungselement (506) geschlossen zu halten,
wobei die Steuereinheit (605) so konfiguriert ist, dass sie den Harzvorwärmprozess ausführt, um das Harz in dem Behältnis (401) zu erwärmen, indem sie optische Strahlung von dem Strahlungselement (505) zu dem geschlossenen Maskierungselement (506) emittiert, wodurch das Maskierungselement (506) durch die in dem Maskierungselement (506) absorbierte optische Strahlung erwärmt wird und thermische Energie weiter auf das Harz in dem Behältnis (401) übertragen wird.

2. Stereolithographiegerät nach Anspruch 1, wobei ein Temperaturdetektor (604) innerhalb des Geräts zum Messen der Temperatur des Harzes im Behältnis (401) vorgesehen ist.

3. Stereolithographiegerät (100) nach Anspruch 2, wobei die Steuereinheit (605) mit dem Temperaturdetektor (604) gekoppelt ist, um Harztemperaturdaten von dem Temperaturdetektor (604) zu empfangen, wobei die Steuereinheit (605) so konfiguriert ist, dass sie die Harztemperaturdaten bei der Steuerung des Harzvorwärmprozesses verwendet.

4. Stereolithographiegerät nach einem der vorhergehenden Ansprüche, wobei das Maskierungselement (506) ein Flüssigkristallelement umfasst.

5. Stereolithographiegerät nach einem der vorhergehenden Ansprüche, wobei das Strahlungselement (505) eine Leuchtdiodenquelle (LED) umfasst.

6. Stereolithographiegerät nach Anspruch 5, wobei die Leuchtdiodenquelle eine Anordnung von LED-Elementen (601) umfasst, deren Fläche im Wesentlichen gleich einer Fläche des Maskierungselements (506) ist.

7. Stereolithographiegerät nach einem der vorhergehenden Ansprüche, wobei das Gerät einen Kühlkanal (901) zwischen dem Strahlungselement (505) und dem Maskierungselement (506) aufweist.

8. Stereolithographiegerät nach Anspruch 7, wobei der Kühlkanal (901) planar ist und sich entlang derjenigen Seitenfläche des Maskierungselements (506) erstreckt, die dem Strahlungselement (505) zugewandt ist.

9. Stereolithographiegerät nach einem der vorhergehenden Ansprüche, wobei das Gerät ferner eine optische Bilderkennungsvorichtung (802) mit einem Sichtfeld umfasst, das so ausgerichtet ist, dass zumindest ein Teil eines Arbeitsbereichs oberhalb der horizontalen oberen Fläche (604) innerhalb des Sichtfeldes liegt, wenn sich die optische Bilderkennungsvorichtung (802) in einer Betriebsposition befindet.

10. Stereolithographiegerät nach Anspruch 9, wobei die Steuereinheit (605) mit der optischen Bilderkennungsvorichtung (802) gekoppelt ist, um optische Bilddaten von der optischen Bilderkennungsvorichtung (802) zu empfangen, wobei die Steuereinheit (605) so konfiguriert ist, dass sie die optischen Bilddaten in dem Harzvorwärmverfahren verwendet.

11. Stereolithographiegerät nach Anspruch 10, wobei die Steuereinheit (605) so konfiguriert ist, dass sie einen maschinellen Bildverarbeitungsprozess ausführt, um Objekte aus den optischen Bilddaten zu erkennen und auf der Grundlage dieser erkannten Objekte Entscheidungen zu treffen.

12. Verfahren zum Vorwärmen von Harz in einem Stereolithographiegerät nach einem der vorhergehenden Ansprüche, umfassend die Schritte::
- Zuführen von Harz auf das Behältnis (401), das in der horizontalen Ebene (503) des Tisches (502) angeordnet ist,
- Schließen des Belichtungsmusters des Maskierungselements (506),
- Halten des Strahlungselements (505) und Aussenden von optischer Strahlung vom Strahlungselement (505) zum Maskierungselement (506), um das Maskierungselement (506) zu erwärmen, von dem thermische Energie in das Harz im Behältnis (401) übertragen wird.

13. Verfahren zum Vorwärmen von Harz nach Anspruch 12, umfassend die Schritte:
- Messen der Harztemperatur durch den Temperaturdetektor (604), und
- Senden von Harztemperaturdaten an die Steuereinheit (605).

14. Verfahren zum Vorwärmen des Harzes nach Anspruch 12 oder 13, wobei die Steuereinheit (605) so konfiguriert ist, dass sie den Vorwärmprozess stoppt, wenn die vom Temperaturdetektor (604) empfangenen Harztemperaturdaten gewünscht sind.

## Revendications

1. Appareil de stéréolithographie, présentant :
- un agencement d'exposition (501) comprenant :
- un élément rayonnant (505) configuré pour émettre un rayonnement optique, et
- un élément de masquage (506) configuré pour former un motif d'exposition en masquant partiellement le rayonnement optique provenant de l'élément rayonnant (505),
- une table (502) présentant une surface supérieure horizontale (503) sur laquelle peut être placée une cuve (401) destinée à contenir de la résine à photopolymériser dans un processus d'impression 3D stéréolithographique par rayonnement optique,
dans lequel
l'élément de masquage (506) est agencé en connexion thermique avec la surface supérieure horizontale (503), et l'appareil comprend en outre un dispositif de commande (605), le dispositif de commande (605) étant couplé i) audit élément rayonnant (505) pour émettre un rayonnement optique depuis l'élément rayonnant (505) vers l'élément de masquage (506),
dans lequel le dispositif de commande est configuré pour exécuter un processus de préchauffage de résine afin de chauffer la résine dans la cuve, **caractérisé en ce que** le dispositif de commande est couplé ii) audit élément de masquage (506) pour maintenir l'élément de masquage (506) fermé,
dans lequel le dispositif de commande (605) est configuré pour exécuter le processus de préchauffage de la résine afin de chauffer la résine dans la cuve (401) en émettant un rayonnement optique depuis l'élément rayonnant (505) vers l'élément de masquage fermé (506), selon lequel l'élément de masquage (506) est chauffé par le rayonnement optique absorbé dans l'élément de masquage (506) et l'énergie thermique est en outre transférée à la résine dans la cuve (401).

2. Appareil de stéréolithographie selon la revendication 1, dans lequel un détecteur de température (604) est prévu à l'intérieur de l'appareil pour mesurer la température de la résine dans la cuve (401).

3. Appareil de stéréolithographie (100) selon la revendication 2, dans lequel le dispositif de commande (605) est couplé au détecteur de température (604) pour recevoir des données de température de résine à partir dudit détecteur de température (604), dans lequel ledit dispositif de commande (605) est configuré pour utiliser lesdites données de température de résine lors de la commande du processus de préchauffage de résine.

4. Appareil de stéréolithographie selon l'une quelconque des revendications précédentes, dans lequel l'élément de masquage (506) comprend un élément à cristaux liquides.

5. Appareil de stéréolithographie selon l'une quelconque des revendications précédentes, dans lequel l'élément rayonnant (505) comprend une source de diodes électroluminescentes (DEL).

6. Appareil de stéréolithographie selon la revendication 5, dans lequel la source de diodes électroluminescentes comprend un réseau d'éléments DEL (601), dont l'aire de surface est sensiblement égale à une aire de surface de l'élément de masquage (506).

7. Appareil de stéréolithographie selon l'une quelconque des revendications précédentes, dans lequel l'appareil comprend un canal de refroidissement (901) entre l'élément rayonnant (505) et l'élément de masquage (506).

8. Appareil de stéréolithographie selon la revendication 7, dans lequel ledit canal de refroidissement (901) est plan et s'étend le long de la surface latérale dudit élément de masquage (506) qui est dirigée vers l'élément rayonnant (505).

9. Appareil de stéréolithographie selon l'une quelconque des revendications précédentes, dans lequel l'appareil comprend en outre un détecteur d'imagerie optique (802) présentant un champ de vision dirigé de telle sorte qu'au moins une partie d'une région de travail au-dessus de la surface supérieure horizontale (604) se trouve à l'intérieur dudit champ de vision lorsque ledit détecteur d'imagerie optique (802) est dans une position de fonctionnement.

10. Appareil de stéréolithographie selon la revendication 9, dans lequel le dispositif de commande (605) est couplé au détecteur d'imagerie optique (802) pour recevoir des données d'image optique à partir dudit détecteur d'imagerie optique (802), dans lequel le dispositif de commande (605) est configuré pour utiliser lesdites données d'image optique dans le processus de préchauffage de résine.

11. Appareil de stéréolithographie selon la revendication 10, dans lequel ledit dispositif de commande (605) est configuré pour exécuter un processus de vision par ordinateur pour reconnaître des objets à partir desdites données d'image optique et pour prendre des décisions sur la base de tels objets reconnus.

12. Procédé de préchauffage de résine à l'intérieur de l'appareil de stéréolithographie selon l'une quelconque des revendications précédentes, comprenant les étapes consistant à :
- apporter de la résine sur la cuve (401) agencée sur le plan horizontal (503) de la table (502),
- fermer le motif d'exposition de l'élément de masquage (506),
- maintenir l'élément rayonnant (505) et émettre un rayonnement optique depuis l'élément rayonnant (505) vers l'élément de masquage (506) pour chauffer l'élément de masquage (506), à partir duquel de l'énergie thermique est transférée jusque dans la résine dans la cuve (401).

13. Procédé de préchauffage de résine selon la revendication 12, comprenant les étapes consistant à :
- mesurer la température de résine par le détecteur de température (604), et
- envoyer des données de température de résine au dispositif de commande (605).

14. Procédé de préchauffage de résine selon la revendication 12 ou 13, dans lequel le dispositif de commande (605) est configuré pour arrêter le processus de préchauffage lorsque les données de température de résine reçues à partir du détecteur de température (604) sont souhaitées.
